# FASCICULE DE BREVET EUROPEEN

(11) **EP 4 179 352 B1**
(45) Date de publication et mention de la délivrance du brevet: **31.07.2024**
(21) Numéro de dépôt: 21736628.5
(22) Date de dépôt: 09.06.2021
(51) Int. Cl.: G01S 7/00, G01S 13/87, G01S 13/931

(54) **PROCÉDÉ ET DISPOSITIF DE VALIDATION D'UN SECOND VÉHICULE, ÉMETTEUR D'UN SIGNAL RADIOFRÉQUENCE, PAR UN PREMIER VÉHICULE, RÉCEPTEUR DUDIT SIGNAL RADIOFRÉQUENCE**
VERFAHREN UND VORRICHTUNG, WOBEI EIN ERSTES FAHRZEUG, DAS EIN HOCHFREQUENZSIGNAL EMPFÄNGT, EIN ZWEITES FAHRZEUG, DAS DIESES HOCHFREQUENZSIGNAL AUSSENDET, BESTÄTIGT
METHOD AND DEVICE WHEREBY A FIRST VEHICLE RECEIVING A RADIO FREQUENCY SIGNAL VALIDATES A SECOND VEHICLE EMITTING SAID RADIO FREQUENCY SIGNAL

(30) Priorité: 07.07.2020 FR 2007156
(43) Date de publication de la demande: 17.05.2023
(73) Titulaire: Stellantis Auto SAS, 78300 Poissy (FR); CTAG-Fundacion Para La Promocion de la Innovacion Investigacion y Desarrollo Techológico Industria, 36475 O Porrino, Pontevedra (ES)
(72) Inventeur: LAIZ, Laudelino, 36.340 Nigran (ES); KADIRI, El Khamis, 78640 NEAUPHLE LE CHATEAU (FR); RODRIGUEZ, Jose luis, 36210 Vigo (ES); PARCERO, Xabier, 36950 Moaña (ES)
(86) Numéro de dépôt international: PCT/FR2021/051031
(87) Numéro de publication internationale: WO 2022/008811

(56) Documents cités:
- EP-A1- 3 165 940
- WO-A1-2018/182723
- US-A1- 2007 164 896

## Description

La présente invention revendique la priorité de la demande française 2007156 déposée le 07.07.2020.

### Domaine technique

L'invention concerne le domaine des communications de signaux radiofréquence entre véhicules, notamment de type automobile.

### Arrière-plan technologique

Un véhicule, notamment de type automobile, embarque un voire plusieurs systèmes radar arrangés sur le véhicule, par exemple à l'avant, à l'arrière, sur chaque coin avant/arrière du véhicule. Un système radar est un système qui utilise des ondes radiofréquences millimétriques (30 GHz à 300 GHz) et fonctionne soit comme un radar dit primaire, soit comme un radar dit secondaire.

Lorsque le système radar fonctionne comme un radar primaire, il fonctionne en mode écho, c'est-à-dire qu'il émet périodiquement des ondes radiofréquence et s'attend à recevoir des ondes radiofréquences réfléchies sur un autre véhicule. Le radar primaire est habituellement utilisé pour détecter la présence, la position, la direction (angle d'azimut) ainsi que la vitesse d'objets environnants tels que des véhicules. Les ondes radiofréquence émises par un émetteur (encore appelé signal radiofréquence émis) sont réfléchies par une cible, et les ondes radiofréquence de retour (encore appelés signal radiofréquence réfléchi) sont captées et analysées par un récepteur, souvent situé au même endroit que l'émetteur. La distance est obtenue grâce au temps aller/retour des ondes radiofréquences, la direction grâce à la position angulaire de l'antenne où le signal radiofréquence réfléchi a été capté et la vitesse avec le décalage de fréquence du signal radiofréquence réfléchi généré selon l'effet Doppler. Un radar primaire est donc adapté pour émettre des ondes millimétriques et pour détecter le retour de ces ondes (écho) après leurs réflexions sur des objets environnants. Chaque objet détecté peut être représenté par un nuage de points (chaque point correspondant à un point d'un objet recevant le rayonnement émis par le radar primaire et réfléchissant au moins en partie ce rayonnement), le nuage de points représentant l'enveloppe (ou une partie de l'enveloppe) de l'objet détecté tel que vu par le radar primaire et in fine par le véhicule embarquant le système radar.

Lorsque le système radar fonctionne comme un radar secondaire, il fonctionne en mode dialogue c'est-à-dire qu'il émet un signal radiofréquence et s'attend à recevoir un signal radiofréquence émis par un système radar d'un autre véhicule. Les signaux radiofréquence ainsi échangés permettent l'échange d'informations entre deux véhicules proches l'un de l'autre.

Le document EP3165940A1 divulgue un système radar de véhicule fonctionnant selon ce principe.

Un système radar d'un véhicule fonctionnant en mode dialogue peut recevoir un signal radiofréquence émis par un système radar d'un autre véhicule environnant. Toutefois, le premier véhicule ne peut pas valider quel est le véhicule émetteur de ce signal radiofréquence notamment lorsque plusieurs véhicules sont à proximité du véhicule.

### Résumé de l'invention

Un objet de la présente invention est d'authentifier un véhicule émetteur d'un signal radiofréquence.

Un autre objet de la présente invention est d'améliorer les systèmes d'aide à la conduite.

Un autre objet de la présente invention est d'améliorer la sécurité routière.

Selon un premier aspect, la présente invention concerne un procédé de validation d'un second véhicule, émetteur d'un signal radiofréquence, par un premier véhicule, récepteur dudit signal radiofréquence, le premier et le second véhicule embarquant chacun un système radar pouvant fonctionner soit en mode écho pour émettre périodiquement un signal radiofréquence et pour recevoir un signal radiofréquence réfléchi sur un autre véhicule, soit en mode dialogue pour émettre un signal radiofréquence et pour recevoir un signal radiofréquence émis par un système radar d'un autre véhicule. Le procédé comprend une étape d'obtention, par le système radar du premier véhicule, d'une première estimée d'une position relative du premier véhicule par rapport au second véhicule à partir dudit signal radiofréquence reçu, ladite première estimée étant obtenue par le système radar du second véhicule fonctionnant en mode écho ; une étape d'obtention d'une seconde estimée d'une position relative du premier véhicule par rapport au second véhicule par le système radar du premier véhicule fonctionnant en mode écho ; et d'une étape de comparaison entre elles de la première et seconde estimées de la position relative du premier véhicule par rapport au second véhicule, le second véhicule est validé comme étant l'émetteur du signal radiofréquence reçu si le résultat de la comparaison établit que la première et la seconde estimées de la position relative du premier véhicule par rapport au second véhicule représentent une même position relative du premier véhicule par rapport au second véhicule.

Le procédé est mis en oeuvre par un système radar pouvant fonctionner soit en mode écho pour émettre périodiquement un signal radiofréquence et pour recevoir un signal radiofréquence réfléchi sur un autre véhicule, soit en mode dialogue pour émettre un signal radiofréquence porteur d'une information et pour recevoir un autre signal radiofréquence, aussi porteur d'informations, et émis par un système radar embarqué sur un autre véhicule. Le procédé est avantageux car il permet l'échange rapide d'informations entre deux véhicules par onde radiofréquence sans passer par exemple par une infrastructure d'un réseau de communication. Le procédé est également avantageux car il permet à un système radar embarqué dans un premier véhicule de basculer rapidement d'un mode écho vers un mode dialogue et réciproquement en fonction d'évènements qui pourraient se produire tel que son rapprochement avec un autre véhicule à proximité. En effet, le système radar d'un premier véhicule fonctionnant en mode dialogue reçoit un signal radiofréquence émis par un second véhicule. Il obtient alors une première estimée d'une position relative du premier véhicule par rapport au second véhicule à partir dudit signal radiofréquence reçu. Ladite première estimée est obtenue par le système radar du second véhicule fonctionnant en mode écho. Le premier véhicule détermine alors une seconde estimée d'une position relative du premier véhicule par rapport au second véhicule par le système radar du premier véhicule fonctionnant en mode écho. Le premier véhicule compare alors entre elles la première et la seconde estimées de la position relative du premier véhicule par rapport au second véhicule qui sont donc obtenues par deux systèmes radar différents. Le premier véhicule peut alors valider que le second véhicule est bien l'émetteur du signal radiofréquence reçu si le résultat de la comparaison établit que la première et la seconde estimées de la position relative du premier véhicule par rapport au second véhicule représente une même position relative du premier véhicule par rapport au second véhicule, ou au moins des positions relatives si proches l'une de l'autre qu'il ne peut y avoir d'ambiguïtés sur l'identité du véhicule émetteur. Un système d'aide à la conduite embarqué dans le véhicule 1 peut alors aisément identifier quelles sont les émetteurs des messages qu'il reçoit et ainsi pouvoir leur émettre individuellement des messages d'alerte par exemple à un véhicule environnant. La sécurité routière est ainsi améliorée.

Selon un mode de réalisation, la comparaison de la première avec la seconde estimées de la position relative du premier véhicule par rapport au second véhicule est un calcul d'une différence entre la première et la seconde estimées.

Selon un mode de réalisation, la première et la seconde estimées de la position relative du premier véhicule par rapport au second véhicule représentent une même position relative du premier véhicule par rapport au second véhicule si la différence est inférieure à une valeur seuil.

Ce mode de réalisation est avantageux car il est peu consommateur en temps de calcul et permet d'évaluer rapidement si la première et la second estimées représentent une même position relative du premier véhicule par rapport au second véhicule.

Selon un mode de réalisation, si le second véhicule n'est pas validé comme étant l'émetteur du signal radiofréquence reçu, un signal radiofréquence porteur d'une requête d'information décrivant une première estimée de la position relative du premier véhicule par rapport au second véhicule obtenue par le système radar du second véhicule fonctionnant en mode écho, est émis, et les étapes de réception, d'obtention et de comparaison du procédé selon le premier aspect sont itérées.

Ce mode de réalisation est avantageux car il permet de palier à d'éventuelles perturbations radiofréquences passagères ou des défections momentanées du système radar du second véhicule qui peuvent perturber l'authentification du second véhicule par le premier véhicule.

Selon un mode de réalisation, si la position géographique du second véhicule est validée comme étant l'émetteur du signal radiofréquence reçu, le système radar du premier véhicule bascule en mode écho.

Ce mode de réalisation est avantageux car il définit un mode de fonctionnement par défaut d'un système radar. Ainsi, un système radar fonctionne en mode écho dès qu'il n'a pas d'échanges d'informations avec un autre véhicule à proximité, ce qui lui permet, par exemple, de suivre l'évolution des distances avec des véhicules et de détecter de nouveaux véhicules en approche.

Selon un deuxième aspect, la présente invention concerne un dispositif comprenant des moyens configurés pour la mise en oeuvre des étapes du procédé selon le premier aspect de l'invention.

Selon un troisième aspect, la présente invention concerne un système radar d'un véhicule comprenant un dispositif configuré selon le deuxième aspect de la présente invention. Il comporte en outre un radar primaire adapté pour fonctionner en mode écho pour émettre périodiquement un signal radiofréquence et pour recevoir un signal radiofréquence réfléchi sur un autre véhicule ; un radar secondaire adapté pour fonctionner en mode dialogue pour émettre un signal radiofréquence et pour recevoir un signal radiofréquence émis par un système radar embarqué sur un autre véhicule ; une unité de seuil de puissance qui détermine si un signal radiofréquence reçu est un signal radiofréquence réfléchi ou un signal radiofréquence émis par un système radar d'un autre véhicule, et un sélecteur adapté pour sélectionner si le système radar utilise le radar primaire ou le radar secondaire en mode émission ou réception.

Selon un quatrième aspect, la présente invention concerne un véhicule comprenant un système radar selon le troisième aspect de la présente invention.

Selon un cinquième aspect, la présente invention concerne un produit programme d'ordinateur comportant des instructions adaptées pour l'exécution des étapes du procédé selon le premier aspect de la présente invention, lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect, la présente invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 4 annexées, sur lesquelles :
[Fig. 1] illustre un environnement routier selon un exemple de réalisation particulier et non limitatif de la présente invention ;
[Fig. 2] illustre schématiquement un système radar selon un exemple de réalisation particulier non limitatif de la présente invention ;
[Fig. 3] illustre schématiquement une unité de contrôle selon un exemple de réalisation particulier non limitatif de la présente invention ; et
[Fig. 4] illustre un organigramme des différentes étapes d'un procédé de validation d'un second véhicule, émetteur d'un signal radiofréquence, par un premier véhicule récepteur dudit signal radiofréquence selon un exemple de réalisation particulier et non limitatif de la présente invention.

### Description des modes de réalisation

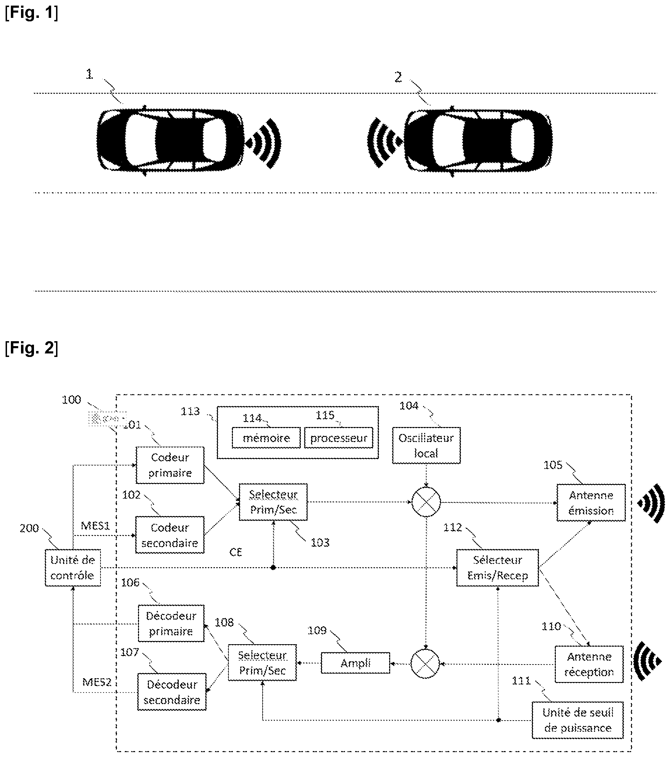

Un procédé, un dispositif et un système radar vont maintenant être décrits dans ce qui va suivre en référence conjointement aux figures 1 à 4. Des mêmes éléments sont identifiés avec des mêmes signes de référence tout au long de la description qui va suivre.

[Fig. 1] illustre un environnement routier selon un exemple particulier non limitatif de la présente invention.

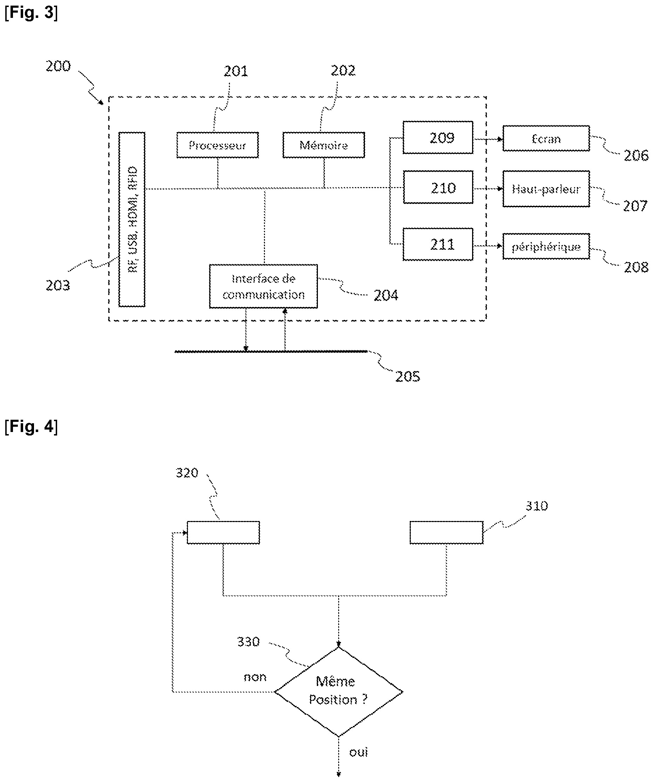

L'environnement routier comporte deux véhicules 1 et 2, de type automobile, incluant bus, car, camion, moto, ou encore tout type de véhicule circulant sur une voie de circulation d'un environnement routier. Chaque véhicule 1 et 2 comporte une unité de contrôle 200 de la figure 3. Le véhicule 1 comporte un système radar 100 de la figure 2 en partie arrière et le véhicule 2 comporte un système radar 100 de la figure 2 en partie avant. Chaque véhicule 1 et 2 peut aussi comporter d'autres systèmes radar de la figure 2 positionnés sur l'avant ou l'arrière de ces véhicules ou autre part sur chaque véhicule.

[Fig. 2] illustre schématiquement un système radar 100 selon un exemple particulier non limitatif de la présente invention.

Le système radar 100 comprend un dispositif 113 comprenant une mémoire 114 associée à un ou plusieurs processeurs 115. Le dispositif 113 est configuré pour mettre en oeuvre un procédé de la figure 4. Le système radar 100 comporte en outre un codeur primaire 101, un codeur secondaire 102, un décodeur primaire 106, un décodeur secondaire 107, une unité de seuil de puissance 111, une antenne d'émission 105, une antenne de réception 110, un amplificateur 109, un sélecteur de mode de codage 103, un sélecteur de mode de décodage 108, un oscillateur local 104 et un sélecteur de mode de fonctionnement 112 qui bascule le système radar 100 soit dans un mode codage/émission ou dans un mode réception/décodage. Le système radar 100 peut être considéré comme fonctionnant comme un radar primaire ou comme un radar secondaire. Le radar primaire fait alors intervenir le codeur primaire 101, l'oscillateur local 104, l'antenne émettrice 105, l'antenne réceptrice 110, l'amplificateur 109 et le décodeur primaire 106. Le radar secondaire fait alors intervenir le codeur secondaire 102, l'oscillateur local 104, l'antenne émettrice 105, l'antenne réceptrice 110, l'amplificateur 109 et le décodeur secondaire 107.

Le système radar 100 est relié à une unité de contrôle 200 qui met en oeuvre différentes analyses des informations qu'elle reçoit des radars primaires et secondaires ou d'équipements embarqués dans un véhicule. Ces équipements embarqués tels que, par exemple, des capteurs, des systèmes de navigation et/ou d'aide à la conduite, peuvent faire partie de l'unité de contrôle 200 ou être distants et alors en lien avec cette unité de contrôle 200. L'unité de contrôle 200 prend alors des décisions concernant le fonctionnement du système radar 100 qui tiennent compte de ces analyses d'informations. Elle peut alors décider de configurer le système radar 100 pour qu'il utilise le radar primaire ou secondaire. Pour cela, l'unité de contrôle 200 émet des commandes CE pour piloter le sélecteur de codage primaire/secondaire 103 ou encore le sélecteur de mode de fonctionnement 112 qui, selon leur états, actionnent l'utilisation du radar primaire ou secondaire pour fonctionner en mode codage/émission ou en mode réception/décodage.

Lorsque le radar primaire est utilisé, le système radar 100 fonctionne en mode écho, c'est-à-dire qu'il émet périodiquement un signal radiofréquence et s'attend à recevoir un signal radiofréquence réfléchi sur un autre véhicule environnant. Plus précisément, le codeur primaire 101 génère une impulsion d'onde, par exemple périodiquement. Cette impulsion d'onde est modulée par un signal généré par l'oscillateur local 104. Le signal modulé ainsi formé est appelé par la suite signal primaire. Le signal primaire est émis via l'antenne émettrice 105. Le sélecteur de mode de fonctionnement 112 configure alors le système radar 100 en mode réception/décodage. Le radar primaire est alors en attente de réception d'une réflexion de ce signal primaire qu'il vient d'émettre. Une fois reçu via l'antenne de réception 110, le signal reçu est démodulé par un signal généré par l'oscillateur local 104. Une impulsion d'onde reçue est alors habituellement amplifiée par l'amplificateur 109. Le décodeur primaire 106, en combinaison, par exemple, avec le dispositif 113, peut déterminer alors une position géographique, un angle d'azimut, une distance et/ou une vitesse d'un véhicule situé à proximité par analyse de l'impulsion d'onde émise et de l'impulsion d'onde reçue qui correspond à une réflexion de l'impulsion d'onde émise sur un véhicule environnant. Une position relative du véhicule par rapport à un véhicule environnant peut aussi être obtenue.

Lorsque le radar secondaire est utilisé, le système radar 100 d'un véhicule fonctionne en mode dialogue c'est-à-dire qu'il émet un signal radiofréquence et s'attend à recevoir un signal radiofréquence émis par un système radar 100 d'un autre véhicule. Plus précisément, le codeur secondaire 102 génère une suite d'impulsions d'onde qui représente un message MES1. Cette suite d'impulsions d'onde est modulée par un signal émis par l'oscillateur local 104. Le signal modulé ainsi formé est appelé par la suite signal secondaire. Un signal secondaire est émis via l'antenne émettrice 105 à destination d'un autre système radar 100 distant (embarqué dans une véhicule environnant). Dans un second temps, un signal secondaire, émis par cet autre système radar 100 distant, est reçu via l'antenne de réception 110. Le signal reçu est démodulé par un signal généré par l'oscillateur local 104. Une suite d'impulsions est alors habituellement amplifiée par l'amplificateur 109 puis décodée par le décodeur secondaire 107 pour obtenir un message MES2 porté par le signal secondaire. Le message MES2 est par exemple un message de réponse à un message de requête MES1.

Les informations obtenues par le décodeur primaire 106 (ou du dispositif 113) telles qu'une position géographique, une distance, et/ou une vitesse d'un véhicule environnant ou encore une position relative d'un véhicule par rapport à un autre véhicule environnant et les messages MS2 obtenus par le décodeur secondaire 107 sont transférés à l'unité de contrôle 200 pour analyse, prise de décision et émission de commandes CE.

L'unité de seuil de puissance 111 a pour fonction de déterminer le type d'un signal radiofréquence reçu, c'est-à-dire si un signal radiofréquence reçu est un signal primaire réfléchi ou un signal secondaire. Elle a aussi pour fonction de piloter l'utilisation du décodeur primaire ou secondaire selon le type de signal radiofréquence reçu. Plus précisément, si le signal radiofréquence reçu est un signal primaire réfléchi alors l'unité de seuil de puissance 111 pilote le sélecteur de mode de décodage 108 pour qu'une impulsion d'onde, issue du signal primaire reçu, soit bien décodée par le décodeur primaire 106. Si le signal radiofréquence reçu est un signal radiofréquence émis par un autre système radar (signal secondaire), alors l'unité de seuil de puissance 111 pilote le sélecteur de mode de décodage 108 pour qu'une suite d'impulsions d'onde, issue du signal secondaire reçu, soit bien décodée par le décodeur secondaire 107. L'unité de seuil de puissance 111 peut également piloter le sélecteur de mode de fonctionnement 112 pour qu'un nouveau signal primaire soit émis en mode écho ou encore qu'un nouveau signal secondaire soit émis par exemple pour poursuivre l'échange d'informations entre deux systèmes radar 100 situés à proximité l'un de l'autre.

Selon un mode de réalisation, l'unité de seuil de puissance détermine si un signal radiofréquence reçu est un signal primaire réfléchi lorsque la puissance de ce signal radiofréquence reçu est inférieure à une valeur seuil T. Si la puissance de ce signal radiofréquence reçu est supérieure ou égale à la valeur de seuil T, alors l'unité de seuil de puissance considère que le signal radiofréquence reçu est un signal secondaire émis par un autre véhicule, par exemple le véhicule 2.

Dans une première opération, le système radar 100 du véhicule 1 fonctionne en mode dialogue c'est-à-dire qu'il utilise le radar secondaire. Un signal radiofréquence est reçu et l'unité de seuil de puissance 111 détermine que le signal radiofréquence reçu est un signal secondaire. Le signal secondaire reçu est porteur d'un message MES2, alors obtenu par le décodeur secondaire 107. Ce message comporte, en outre, une première estimée d'une position relative entre le véhicule 1 et le véhicule 2. Ladite première estimée ayant été obtenue par le système radar du véhicule 2 fonctionnant en mode écho. L'unité de contrôle 200 émet alors une commandes CE pour piloter le sélecteur de codage primaire/secondaire 103 et le sélecteur de mode de fonctionnement 112 pour actionner le radar primaire.

Dans une deuxième opération, le système radar 100 du véhicule 1 fonctionne alors en mode écho. Un signal primaire est émis via l'antenne d'émission 105. Le sélecteur de mode de fonctionnement 112 configure alors le système radar 100 en mode réception/décodage. Comme les véhicules 1 et 2 sont à proximité l'un de l'autre, le signal primaire envoyé par le véhicule 1 est réfléchi sur le véhicule 2. Le signal primaire réfléchi est alors reçu par l'antenne de réception 110 du système 100 du véhicule 1. Le décodeur primaire 106, en combinaison, par exemple, avec le dispositif 113, obtient alors une seconde estimée d'une position relative entre le véhicule 1 et le véhicule 2.

Dans une troisième opération, l'unité de contrôle 200 compare la première estimée de la position relative entre le véhicule 1 et le véhicule 2, obtenue à partir du message MES2 reçu, à la seconde estimée de la position relative entre le véhicule 1 et le véhicule 2. Le véhicule 2 est validé comme étant l'émetteur du signal radiofréquence reçu si le résultat de la comparaison établit que la première et la seconde estimées de la position relative entre le véhicule 1 et le véhicule 2 représentent une même position relative entre le véhicule 1 et le véhicule 2.

Selon un mode de réalisation, la comparaison de la première avec la seconde estimées de la position relative entre le véhicule 1 et le véhicule 2 est un calcul d'une différence entre la première et la seconde estimées.

Selon un mode de réalisation, la première et la seconde estimées de la position relative du premier véhicule par rapport au second véhicule représentent une même position relative entre le véhicule 1 et le véhicule 2 si la différence est inférieure à une valeur seuil.

Selon un mode de réalisation, si le véhicule 2 n'est pas validé comme étant l'émetteur du signal radiofréquence reçu, le système radar 100 émet un signal secondaire porteur d'un message MES1 de requête d'information décrivant une première estimée de la position relative entre le véhicule 1 et le véhicule 2. Le système radar 100 du véhicule 2 obtient alors ladite première estimée en fonctionnant en mode écho, et émet alors un nouveau signal secondaire porteur d'un message MES2 de réponse comportant l'information requise. Les première, deuxième et troisième opérations sont alors réitérées.

Selon un mode de réalisation, si le véhicule 2 est validé comme étant l'émetteur du signal radiofréquence reçu, le système radar 100 du véhicule 1 bascule du mode dialogue (radar secondaire) dans le mode écho (radar primaire).

[Fig. 3] illustre schématiquement une unité de contrôle 200 selon un exemple de réalisation particulier et non limitatif de la présente invention. L'unité de contrôle 200 correspond par exemple à un dispositif embarqué dans le véhicule, tel que par exemple un calculateur ou un ensemble de calculateurs.

L'unité de contrôle 200 est par exemple configurée pour la mise en oeuvre d'au moins une des étapes du procédé décrit en regard de la figure 4. Des exemples d'une telle unité de contrôle 200 comprennent, sans y être limités, un équipement électronique embarqué tel qu'un ordinateur de bord d'un véhicule, un calculateur électronique tel qu'une UCE (« Unité de Commande Electronique »), un téléphone intelligent (de l'anglais « smartphone »), une tablette, un ordinateur portable. Les éléments de l'unité de contrôle 200, individuellement ou en combinaison, peuvent être intégrés dans un unique circuit intégré, dans plusieurs circuits intégrés, et/ou dans des composants discrets. L'unité de contrôle 200 peut être réalisée sous la forme de circuits électroniques ou de modules logiciels (ou informatiques) ou encore d'une combinaison de circuits électroniques et de modules logiciels. Selon différents modes de réalisation particuliers, l'unité de contrôle 200 est couplée en communication avec d'autres dispositifs ou systèmes similaires, par exemple par l'intermédiaire d'un bus de communication ou au travers de ports d'entrée / sortie dédiés.

L'unité de contrôle 200 comprend un (ou plusieurs) processeur(s) 201 configurés pour exécuter des instructions pour la réalisation des étapes du procédé et/ou pour l'exécution des instructions du ou des logiciels embarqués dans l'unité de contrôle 200. Le processeur 210 peut inclure de la mémoire intégrée, une interface d'entrée/sortie, et différents circuits connus de l'homme du métier. L'unité de contrôle 200 comprend en outre au moins une mémoire 202 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 202.

Selon un mode de réalisation particulier et non limitatif, l'unité de contrôle 200 comprend un bloc 203 d'éléments d'interface pour communiquer avec des dispositifs externes tels que le système radar de la figure 2 ou encore un serveur distant ou un équipement embarqué dans un véhicule tels que, par exemple, des capteurs, des systèmes de navigation et/ou d'aide à la conduite, ou encore un lecteur de communication en champ proche ou un récepteur radio. Le bloc 203 d'éléments d'interface est également configuré pour recevoir des informations issues du décodeur primaire 106 et des messages MES2 issus du décodeur secondaire 107. Le bloc 203 d'éléments d'interface est également configuré pour émettre des commandes CE et des messages MES1 ou des instructions au codeur primaire 101 selon le procédé décrit en regard de la figure 4. Les éléments d'interface du bloc 430 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Définition Multimedia Interface », ou « Interface Multimedia Haute Définition » en français) ;
- interface LIN (de l'anglais « Local Interconnect Network », ou en français « Réseau interconnecté local »).

Selon une variante, l'unité de contrôle 200 comprend une interface de communication 204 qui permet d'établir une communication avec d'autres dispositifs via un canal de communication 205. L'interface de communication 204 correspond par exemple à un transmetteur configuré pour transmettre et recevoir des informations et/ou des données via le canal de communication 205 tels que des évènements extérieurs pris en considération par l'unité de contrôle 200 pour prendre une décision concernant le système radar 100. L'interface de communication 204 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802.3).

Selon un mode de réalisation particulier supplémentaire, l'unité de contrôle 200 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 4] illustre un organigramme des différentes étapes d'un procédé validation d'un second véhicule 2, émetteur d'un signal radiofréquence, par un premier véhicule 1, récepteur dudit signal radiofréquence selon un exemple de réalisation particulier et non limitatif de la présente invention.

Dans une première étape 310, une première estimée d'une position relative du premier véhicule par rapport au second véhicule à partir dudit signal radiofréquence reçu, est obtenu par le système radar du premier véhicule, ladite première estimée étant obtenue par le système radar du second véhicule fonctionnant en mode écho.

Dans une deuxième étape 320, une seconde estimée d'une position relative du premier véhicule par rapport au second véhicule est obtenue par le système radar du premier véhicule fonctionnant en mode écho.

Dans une troisième étape 330, la première et seconde estimées de la position relative du premier véhicule par rapport au second véhicule sont comparées entre elles. Le second véhicule est alors validé comme étant l'émetteur du signal radiofréquence reçu si le résultat de la comparaison établit que la première et la seconde estimées de la position relative du premier véhicule par rapport au second véhicule représentent une même position relative du premier véhicule par rapport au second véhicule.

Selon un mode de réalisation, le véhicule 1 et le véhicule 2 de la figure 1 embarque un système radar 100 de la figure 2.

En variante, le véhicule 1 et le véhicule 2 embarque une unité de contrôle 200 de la figure 2 qui est reliée au système de radar 100.

Bien entendu, la présente invention ne se limite pas aux modes de réalisation et autres exemples ou variantes décrits ci-avant mais s'étend à tous modes et/ou variante de réalisation qui aurait la même portée. En particulier, le procédé décrit la validation d'un second véhicule par un premier véhicule en comparant deux estimées de la position relative du premier véhicule par rapport au second véhicule. La position relative entre deux véhicules peut être définie par un radar primaire par exemple à partir de la distance entre deux véhicules et un position géographique de l'un d'entre eux obtenue, par exemple par un récepteur satellitaire de type GPS. Mais la position relative entre deux véhicules peut aussi se définir par la distance relative entre ces deux véhicules et un angle d'azimut. Par ailleurs, l'unité de seuil de puissance 11 et/ou le dispositif 113 ont été décrits comme étant des éléments du système radar 100. Toutefois, en variante, l'unité de seuil de puissance 111 et/ou le dispositif 113 peuvent être externes au système radar 100 ou encore être un (des) équipement(s) associé(s) au système radar 100 ou encore être un (des) éléments de l'unité de contrôle 200. Certaines étapes du procédé ont été décrites comme étant mises en oeuvre par le décodeur secondaire 106 en combinaison avec le dispositif 113, l'unité de seuil de puissance 11 et l'unité de contrôle 200. Toutefois, certaines voire toutes ces étapes peuvent aussi être mises en oeuvre par l'unité de contrôle 200 qui comporterait alors des moyens équivalents au décodeur secondaire 106 et/ou au dispositif 113 et/ou à l'unité de seuil de puissance 111. De même, certaines étapes ont été décrites comme étant mises en oeuvre par l'unité de contrôle 200. Toutefois, ces étapes peuvent aussi être mises en oeuvre par un dispositif 113 qui aurait alors les même capacités que l'unité de contrôle 200.

## Revendications

1. Procédé de validation d'un second véhicule (2) émetteur d'un signal radiofréquence, par un premier véhicule (1), récepteur dudit signal radiofréquence, le premier et le second véhicule embarquant chacun un système radar pouvant fonctionner soit en mode écho pour émettre périodiquement un signal radiofréquence et pour recevoir un signal radiofréquence réfléchi sur un autre véhicule, soit en mode dialogue pour émettre un signal radiofréquence et pour recevoir un signal radiofréquence émis par un système radar d'un autre véhicule, le procédé comprenant des étapes de :
- obtention (310), par le système radar du premier véhicule fonctionnant en mode dialogue, d'une première estimée d'une position relative du premier véhicule par rapport au second véhicule à partir dudit signal radiofréquence reçu, ladite première estimée étant obtenue par le système radar du second véhicule fonctionnant en mode écho ;
- obtention (320) d'une seconde estimée d'une position relative du premier véhicule par rapport au second véhicule par le système radar du premier véhicule fonctionnant en mode écho ;
- comparaison (330) entre elles de la première et seconde estimées de la position relative du premier véhicule par rapport au second véhicule; et
- le second véhicule est validé comme étant l'émetteur du signal radiofréquence reçu si le résultat de la comparaison établit que la première et la seconde estimées de la position relative du premier véhicule par rapport au second véhicule représentent une même position relative du premier véhicule par rapport au second véhicule.

2. Procédé selon la revendication 1, pour lequel la comparaison de la première avec la seconde estimées de la position relative du premier véhicule par rapport au second véhicule est un calcul d'une différence entre la première et la seconde estimées.

3. Procédé selon la revendication 2, pour lequel la première et la seconde estimées de la position relative du premier véhicule par rapport au second véhicule représentent une même position relative du premier véhicule par rapport au second véhicule si la différence est inférieure à une valeur seuil.

4. Procédé selon l'une des revendications 1 à 3, pour lequel si le second véhicule n'est pas validé comme étant l'émetteur du signal radiofréquence reçu, un signal radiofréquence porteur d'une requête d'information décrivant une première estimée de la position relative du premier véhicule par rapport au second véhicule obtenue par le système radar du second véhicule fonctionnant en mode écho, est émis, et les étapes de réception, d'obtention et de comparaison de la revendication 1 sont itérées.

5. Procédé selon l'une des revendications 1 à 4, pour lequel si le second véhicule est validé comme étant l'émetteur du signal radiofréquence reçu, le système radar du premier véhicule bascule en mode écho.

6. Dispositif comprenant des moyens (113, 106, 200) configurés pour la mise en oeuvre des étapes d'un procédé selon l'une quelconque des revendications 1 à 5.

7. Système radar d'un véhicule comprenant :
- un dispositif (113) selon la revendication 6 ;
- un radar primaire (101, 104, 105, 110, 109, 106) adapté pour fonctionner en mode écho pour émettre périodiquement un signal radiofréquence et pour recevoir un signal radiofréquence réfléchi sur un autre véhicule ;
- un radar secondaire (102, 104, 105, 110, 109, 107) adapté pour fonctionner en mode dialogue pour émettre un signal radiofréquence et pour recevoir un signal radiofréquence émis par un système radar d'un autre véhicule ;
- une unité de seuil de puissance (111) qui détermine si un signal radiofréquence reçu est un signal radiofréquence réfléchi ou un signal radiofréquence émis par un système radar d'un autre véhicule ; et
- un sélecteur (103, 108, 112) adapté pour sélectionner si le système radar utilise le radar primaire ou le radar secondaire en mode émission ou en mode réception.

8. Véhicule (1, 2) comprenant un système radar selon la revendication 7.

9. Produit programme d'ordinateur comportant des instructions adaptées pour l'exécution des étapes du procédé selon l'une des revendications 1 à 5, lorsque le programme d'ordinateur est exécuté par au moins un processeur.

10. Support d'enregistrement lisible par un ordinateur sur lequel est enregistré un programme d'ordinateur comprenant des instructions pour l'exécution des étapes du procédé selon l'une des revendications 1 à 5.

## Patentansprüche

1. Verfahren zur Validierung eines zweiten Fahrzeugs (2), das ein Hochfrequenzsignal sendet, durch ein erstes Fahrzeug (1), Empfänger des Hochfrequenzsignals, wobei das erste und das zweite Fahrzeug jeweils über ein Radarsystem verfügen, das zum Senden entweder im Echomodus arbeiten kann periodisch ein Hochfrequenzsignal zu senden und ein von einem anderen Fahrzeug reflektiertes Hochfrequenzsignal zu empfangen, oder im Dialogmodus ein Hochfrequenzsignal zu senden und ein von einem Radarsystem eines anderen Fahrzeugs gesendetes Hochfrequenzsignal zu empfangen, wobei das Verfahren die folgenden Schritte umfasst:
- Erhalten (310) einer ersten Schätzung einer relativen Position des ersten Fahrzeugs relativ zum zweiten Fahrzeug aus dem empfangenen Hochfrequenzsignal durch das im Dialogmodus arbeitende Radarsystem des ersten Fahrzeugs, wobei die erste Schätzung durch das Systemradar erhalten wird des zweiten Fahrzeugs im Echomodus;
- Erhalten (320) einer zweiten Schätzung einer relativen Position des ersten Fahrzeugs relativ zum zweiten Fahrzeug durch das Radarsystem des ersten Fahrzeugs, das im Echomodus arbeitet;
- Vergleich (330) der ersten und zweiten Schätzungen der relativen Position des ersten Fahrzeugs in Bezug auf das zweite Fahrzeug; und
- das zweite Fahrzeug wird als Sender des empfangenen Hochfrequenzsignals validiert, wenn das Ergebnis des Vergleichs ergibt, dass die ersten und zweiten Schätzungen der relativen Position des ersten Fahrzeugs relativ zum zweiten Fahrzeug dieselbe relative Position des ersten Fahrzeugs repräsentieren erstes Fahrzeug im Vergleich zum zweiten Fahrzeug.

2. Verfahren nach Anspruch 1, bei dem der Vergleich der ersten mit den zweiten Schätzungen der relativen Position des ersten Fahrzeugs in Bezug auf das zweite Fahrzeug eine Berechnung einer Differenz zwischen der ersten und der zweiten Schätzung ist.

3. Verfahren nach Anspruch 2, bei dem die ersten und zweiten Schätzungen der relativen Position des ersten Fahrzeugs relativ zum zweiten Fahrzeug dieselbe relative Position des ersten Fahrzeugs relativ zum zweiten Fahrzeug darstellen, wenn die Differenz kleiner als ein Schwellenwert ist.

4. Verfahren nach einem der Ansprüche 1 bis 3, bei dem, wenn das zweite Fahrzeug nicht als Sender des empfangenen Hochfrequenzsignals validiert ist, ein Hochfrequenzsignal eine Informationsanfrage trägt, die eine erste Schätzung der Position relativ zum ersten Fahrzeug beschreibt Das vom Radarsystem des im Echomodus arbeitenden zweiten Fahrzeugs ermittelte Verhältnis des Fahrzeugs zum zweiten Fahrzeug wird übertragen, und die Schritte des Empfangens, Erhaltens und Vergleichens von Anspruch 1 werden wiederholt.

5. Verfahren nach einem der Ansprüche 1 bis 4, bei dem, wenn das zweite Fahrzeug als Sender des empfangenen Hochfrequenzsignals validiert wird, das Radarsystem des ersten Fahrzeugs in den Echomodus wechselt.

6. Vorrichtung mit Mitteln (113, 106, 200), die zur Umsetzung der Schritte eines Verfahrens nach einem der Ansprüche 1 bis 5 konfiguriert sind.

7. Radarsystem eines Fahrzeugs, umfassend:
- eine Vorrichtung (113) nach Anspruch 6;
- ein Primärradar (101, 104, 105, 110, 109, 106), das im Echomodus betrieben werden kann, um periodisch ein Hochfrequenzsignal auszusenden und ein von einem anderen Fahrzeug reflektiertes Hochfrequenzsignal zu empfangen;
- ein Sekundärradar (102, 104, 105, 110, 109, 107), das im Dialogmodus betrieben werden kann, um ein Hochfrequenzsignal zu senden und ein Hochfrequenzsignal zu empfangen, das von einem Radarsystem eines anderen Fahrzeugs gesendet wird;
- eine Leistungsschwellenwerteinheit (111), die bestimmt, ob ein empfangenes Hochfrequenzsignal ein reflektiertes Hochfrequenzsignal oder ein von einem Radarsystem eines anderen Fahrzeugs gesendetes Hochfrequenzsignal ist; und
- einen Wähler (103, 108, 112), der geeignet ist, auszuwählen, ob das Radarsystem das Primärradar oder das Sekundärradar im Sendemodus oder im Empfangsmodus verwendet.

8. Fahrzeug (1, 2), umfassend ein Radarsystem nach Anspruch 7.

9. Computerprogrammprodukt, das Anweisungen umfasst, die für die Ausführung der Schritte des Verfahrens nach einem der Ansprüche 1 bis 5 geeignet sind, wenn das Computerprogramm von mindestens einem Prozessor ausgeführt wird.

10. Computerlesbares Aufzeichnungsmedium, auf dem ein Computerprogramm mit Anweisungen zur Durchführung der Schritte des Verfahrens nach einem der Ansprüche 1 bis 5 aufgezeichnet ist.

## Claims

1. Method for validating a second vehicle (2) transmitting a radio frequency signal, by a first vehicle (1), receiver of said radio frequency signal, the first and the second vehicle each carrying a radar system which can operate either in echo mode to transmit periodically a radio frequency signal and to receive a radio frequency signal reflected on another vehicle, or in dialogue mode to transmit a radio frequency signal and to receive a radio frequency signal transmitted by a radar system of another vehicle, the method comprising steps of:
- obtaining (310), by the radar system of the first vehicle operating in dialogue mode, a first estimate of a relative position of the first vehicle relative to the second vehicle from said radio frequency signal received, said first estimate being obtained by the system radar of the second vehicle operating in echo mode;
- obtaining (320) a second estimate of a relative position of the first vehicle relative to the second vehicle by the radar system of the first vehicle operating in echo mode;
- comparison (330) between them of the first and second estimates of the relative position of the first vehicle with respect to the second vehicle; and
- the second vehicle is validated as being the transmitter of the radio frequency signal received if the result of the comparison establishes that the first and second estimates of the relative position of the first vehicle relative to the second vehicle represent the same relative position of the first vehicle compared to the second vehicle.

2. Method according to claim 1, for which the comparison of the first with the second estimates of the relative position of the first vehicle with respect to the second vehicle is a calculation of a difference between the first and the second estimates.

3. Method according to claim 2, for which the first and second estimates of the relative position of the first vehicle relative to the second vehicle represent the same relative position of the first vehicle relative to the second vehicle if the difference is less than a threshold value.

4. Method according to one of claims 1 to 3, for which if the second vehicle is not validated as being the transmitter of the received radio frequency signal, a radio frequency signal carrying a request for information describing a first estimate of the position relative of the first vehicle relative to the second vehicle obtained by the radar system of the second vehicle operating in echo mode, is transmitted, and the steps of receiving, obtaining and comparing of claim 1 are iterated.

5. Method according to one of claims 1 to 4, for which if the second vehicle is validated as being the transmitter of the received radio frequency signal, the radar system of the first vehicle switches to echo mode.

6. Device comprising means (113, 106, 200) configured for implementing the steps of a method according to any one of claims 1 to 5.

7. Radar system of a vehicle comprising:
- a device (113) according to claim 6;
- a primary radar (101, 104, 105, 110, 109, 106) adapted to operate in echo mode to periodically emit a radio frequency signal and to receive a radio frequency signal reflected on another vehicle;
- a secondary radar (102, 104, 105, 110, 109, 107) adapted to operate in dialogue mode to transmit a radio frequency signal and to receive a radio frequency signal transmitted by a radar system of another vehicle;
- a power threshold unit (111) which determines whether a received radio frequency signal is a reflected radio frequency signal or a radio frequency signal transmitted by a radar system of another vehicle; and
- a selector (103, 108, 112) adapted to select whether the radar system uses the primary radar or the secondary radar in transmission mode or in reception mode.

8. Vehicle (1, 2) comprising a radar system according to claim 7.

9. Computer program product comprising instructions adapted for the execution of the steps of the method according to one of claims 1 to 5, when the computer program is executed by at least one processor.

10. Computer-readable recording medium on which a computer program comprising instructions for carrying out the steps of the method according to one of Claims 1 to 5 is recorded.
